# EUROPEAN PATENT APPLICATION

(11) **EP 4 717 490 A1**
(43) Date of publication of application: **01.04.2026**
(21) Application number: 24217308.6
(22) Date of filing: 03.12.2024
(51) Int. Cl.: B60K 17/28, B60K 1/02, F16H 3/089

(54) **INDEPENDENT POWER SPLIT TRANSFER DRIVETRAIN FOR ELECTRIC VEHICLES AND A METHOD THEROF**

(30) Priority: 27.09.2024 IN 202441073069
(71) Applicant: Tractors and Farm Equipment Limited, Chennai, Tamil Nadu 600002 (IN)
(72) Inventor: Sethuraman, Sriraman, 600011 Chennai, Tamil Nadu (IN); Narayana rao, Suresh kumar, 600011 Chennai, Tamil Nadu (IN); Muthu, Rajapandian, 600011 Chennai, Tamil Nadu (IN)
(74) Representative: Dondi, Silvia

(57) **Abstract**

The present invention relates to an independent power split transfer drivetrain (100) for electric vehicles (EV), comprising: at least two prime movers comprising a first motor M1 for driving a plurality of wheels and a second motor M2 for driving the Power Take-Off (PTO); a transmission unit comprising a 2-Stage reduction gearbox which splits the power between a front and rear axle (101, 102) using a plurality of traction gear pairs (GP1, GP2, GP3, GP4, GP5, and GP6) and between a mid and rear PTO's (103, 104) using a plurality of PTO gear pairs (GP7, GP8, GP9 and GPIO); a flexible coupling Cl connects the output shaft of the first motor M1 and the second motor M2 to the transmission unit; a shift sleeve S1 configured to assembled in between the traction gear pairs GP1 and GP2. Advantageously, the present invention enhances the versatility and efficiency of EVs.

## Description

### FIELF OF THE INVENTION

The present invention relates to a drivetrain architecture. More particularly, the present invention relates to an independent power split transfer drivetrain for electric vehicles (EV) specifically an electric tractor which provides the independent road speeds and infinite Power Take-Off (PTO) speeds. Advantageously, the present invention enhances the versatility and efficiency of EVs, by overcoming the speed interdependency issue and provides a more robust and flexible power distribution system.

### BACKGROUND OF THE INVENTION

Electric tractors represent a significant advancement in agricultural technology, combining the principles of electric vehicle (EV) architecture with the specific needs of farming operations. The architecture of electric tractors is designed to optimize efficiency and sustainability in the field. Unlike traditional tractors that rely on internal combustion engines (ICEs), electric tractors have a simpler powertrain with fewer moving parts, leading to reduced maintenance requirements and a quieter operation. The absence of an exhaust system underscores their zero-emission capability, making them an environmentally friendly option for farmers.

Powertrain of an electric tractor, for instance, typically consists of a high-voltage battery pack, an inverter, and a motor controller. The battery pack, often composed of lithium-ion cells, stores electrical energy and provides power to the vehicle. The inverter, which converts DC power from the battery pack to AC power, is connected to the motor controller. The motor controller manages the flow of electrical energy to the electric motor, which propels the tractor. In addition to the powertrain, the EV's architecture also includes advanced electronic control units (ECUs) that manage various vehicle systems, such as traction control, braking, and infotainment.

### Some of the prior arts are:

US7421917 B2 discloses an Tractor with a PTO apparatus comprises a plurality of wheels; a vehicle body supported by the plurality of wheels; an engine supported on the vehicle body; a rear PTO shaft disposed at a rear of the vehicle body for transmitting power from the engine; a mid-PTO shaft disposed under the vehicle body for transmitting power from the engine; a PTO mode selecting device having a first position for transmitting power only to the rear PTO shaft, a second position for transmitting power to both the rear PTO shaft and said mid-PTO shaft, and a third position for transmitting power only to said mid-PTO shaft; a PTO clutch disposed on a transmission line upstream of said PTO mode selecting device and switchable between an engaged position and a disengaged position; and a restricting mechanism for preventing a change operation of said PTO mode selecting device when said PTO clutch is in the engaged position, and permitting the change operation of said PTO mode selecting device when said PTO clutch is in the disengaged position.

US11981213 B2 discloses an Electric drivetrain and method for operation of said drivetrain a first and a second electric motor-generator rotationally coupled to a planetary assembly that is rotationally coupled to a drive axle via an output gear. The system further includes a controller that is configured to, during a first operating condition, operate each of the first and second electric motor-generators in a motor mode or a generator mode and hold the output gear at a zero speed.

US20230099321 A1 discloses an electric driveline system and electric driveline system operating method comprises an electric drive unit with a planetary gearset that includes a first gearset component that is rotationally coupled to a first electric machine and a second electric machine. The electric drive unit additionally includes an output shaft rotationally coupled to a second gearset component in the planetary gearset, a first friction clutch configured to selectively brake a third gearset component in the planetary gearset, and a second friction clutch configured to selectively couple the first gearset component to an output shaft.

Traditional Electric drivetrain for EVs discussed in the prior art comprising the electric motor which is typically connected to the wheels through a single drivetrain, and the power output is split between traction and PTO functions. This means that the speed of the PTO must be limited by the speed of the road speed, as the electric motor can only produce a certain amount of torque. This limitation restricts the ability to control the PTO speed independently of the road speed, which can be a challenge in applications such as tractors and field equipment.

Accordingly, there is a need for an improved independent power split transfer drivetrain for electric vehicles which supplies 100% power split to each Traction and PTO drives, allows for higher PTO speeds, improves traction performance, and making it suitable for various tractor and field applications.

### OBJECT OF THE INVENTION

The principal object of the present invention is to provide an independent power split transfer drivetrain for electric vehicles (EV) allows for higher PTO speeds, thus making it suitable for applications that require high-speed PTO operation.

Another object of this invention is to provide an independent power split transfer drivetrain which provides dedicated power to the wheels, improving traction and stability on uneven or slippery surfaces.

Another object of this invention is to provide an independent power split transfer drivetrain which allows for optimized power distribution to each drive, reducing energy waste and increasing overall efficiency.

Another object of this invention is to provide an independent power split transfer drivetrain which divides the power between the front and rear wheels in a 4WD system or between the left and right wheels in a 2WD system.

### SUMMARY OF THE INVENTION

It is a primary aspect of the present invention to provide an independent power split transfer drivetrain (100) for electric vehicles (EV), comprising: at least two prime movers comprising a first motor M1 for driving a plurality of wheels and a second motor M2 for driving the Power Take-Off (PTO); a transmission unit comprising a 2-Stage reduction gearbox which splits the power between a front and rear axle using a plurality of traction gear pairs (GP1, GP2, GP3, GP4, GP5, and GP6) and between a mid and rear PTO's using a plurality of PTO gear pairs (GP7, GP8, GP9 and GP10); a flexible coupling C1 connects the output shaft of the first motor M1 and the second motor M2 to the transmission unit; a shift sleeve S1 configured to assembled in between the traction gear pairs GP1 and GP2. The 2-Stage reduction gearbox is configured to be in neutral stage and the traction gear pairs GP1, GP2 are rotated freely without engaging the output shaft when the vehicle is switched on.

The independent power split transfer drivetrain (100) working on following modes comprises:
**(i) two wheel drive (2WD) mode,** the first motor M1 drives the rear axle (102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on user selection of the direction of the shift using the range shift lever, the power is transmitted from either GP1 or GP2 to GP3 to GP7 to power the rear axle (102) for driving the rear wheels when shift sleeve S1 engages with either GP1 or GP2,
**(ii) four wheel drive (4WD) mode,** the first motor M1 drives both the front and rear axle (101, 102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on the direction of the shift when the user selects the high range speed using the range shift lever, the power is transmitted from either GP1 to GP3 to GP7 or GP2 to GP3 to GP7 to powers the rear axle (102) for driving the rear wheels when shift sleeve S1 engages with either GP1 or GP2 and simultaneously the power is transmitted from GP3 to GP4 to GPS to GP6 to power the front axle (102) for driving the front wheels when shift sleeve S2 is engaged, and
**(iii) PTO motor mode:** the second motor M2 drives the PTOs, the output shaft of the second motor M2 rotates when the electrical lever is actuated, and the power is transmitted from the second Motor M2 to the traction gear pair GP8 and GP11, the power is transmitted from GP8 to GP9 to GP10 to powers the mid PTO when the shift sleeve S3 engages with GP8, the GP11 directly powers the rear PTO when shift sleeve S4 engages with GP11, and both the mid and rear PTOs are powered when shift sleeve S3 and S4 engages with GP8 and GP11.

Another aspect of the present invention is to provide a method of working of an independent power split transfer drivetrain (100) for electric vehicles (EV), said method comprises steps of:
a. during two wheel drive (2WD) mode: driving the rear axle (102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on user selection of the direction of the shift using the range shift lever, transmitting the power from either GP1 or GP2 to GP3 to GP7 to power the rear axle (102) for driving the rear wheels when shift sleeve S1 engages with either GP1 or GP2,
b. during four wheel drive (4WD) mode: driving both the front and rear axle (101, 102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on the direction of the shift when the user selects the high range speed using the range shift lever, transmitting the power from either GP1 to GP3 to GP7 or GP2 to GP3 to GP7 to powers the rear axle (102) for driving the rear wheels when shift sleeve S1 engages with either GP1 or GP2 and simultaneously transmitting the power from GP3 to GP4 to GPS to GP6 to power the front axle (102) for driving the front wheels when shift sleeve S2 is engaged, and
c. (iii) during PTO motor mode: driving the PTOs by the second motor M2, rotating the output shaft of the second motor M2 when the electrical lever is actuated, transmitting the power from the second Motor M2 to the traction gear pair GP8 and GP11, transmitting the power from GP8 to GP9 to GP10 to powers the mid PTO when the shift sleeve S3 engages with GP8, directly powering the rear PTO by the GP11 when shift sleeve S4 engages with GP 11, and powering both the mid and rear PTOs when shift sleeve S3 and S4 engages with GP8 and GP11.

### BRIEF DESCRIPTION OF THE DRAWINGS

Figure 1 is a schematic view of an independent power split transfer drivetrain for electric vehicles (EV) in 2WD configuration mode according to the present invention.

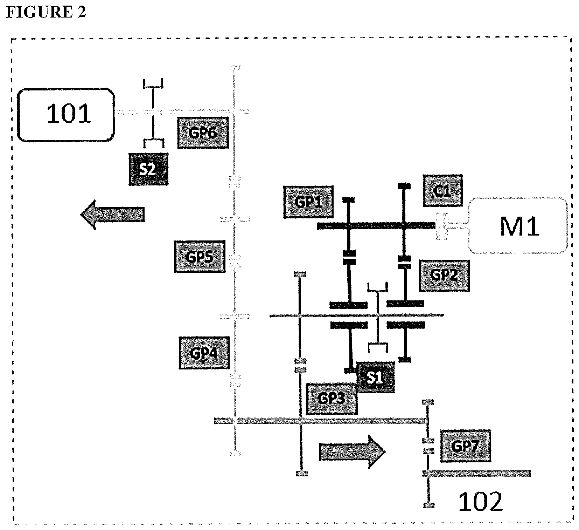

Figure 2 is a schematic view of an independent power split transfer drivetrain for electric vehicles (EV) in 4WD configuration mode according to the present invention.

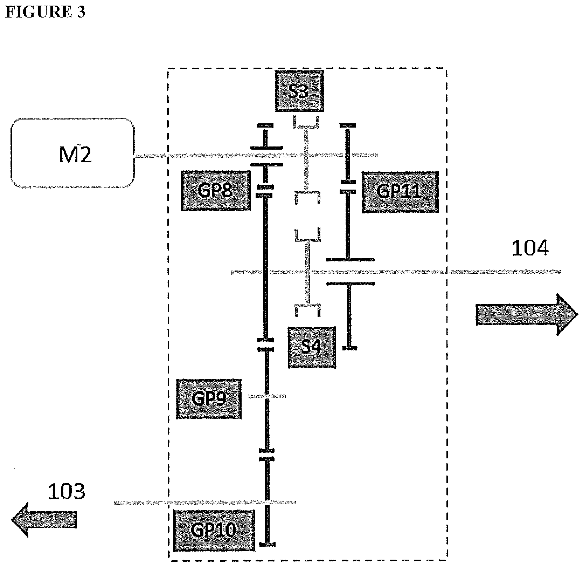

Figure 3 is a schematic view of an independent power split transfer drivetrain for electric vehicles (EV) in PTOs configuration mode.

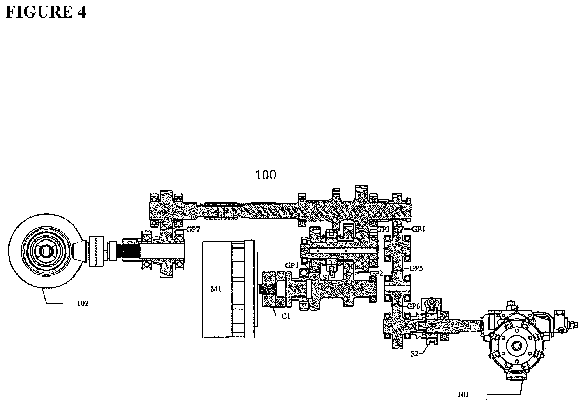

Figure 4 is a view of an independent power split transfer drivetrain for electric vehicles (EV) according to the present invention.

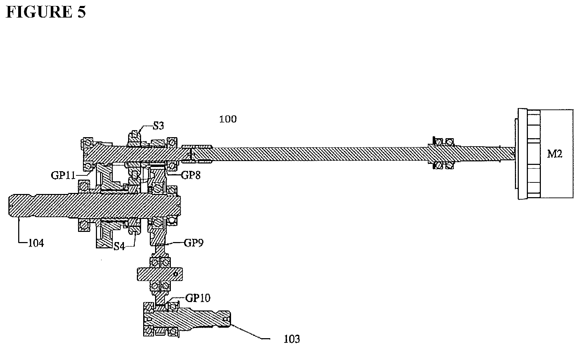

Figure 5 is a view of an independent power split transfer drivetrain for electric vehicles (EV) according to the present invention.

### DETAILED DESCRIPTION OF THE INVENTION

The present invention as embodied by a "an independent power split transfer drivetrain (100) for electric vehicles (EV) and method thereof' succinctly fulfills the above-mentioned need[s] in the art. The present invention has objective[s] arising because of the above-mentioned need[s], said objective[s] having been enumerated herein above.

The following description is directed to an independent power split transfer drivetrain (100) for electric vehicles (EV) and method thereof as much as the objective(s) of the present invention are enumerated, it will be obvious to a person skilled in the art that, the enumerated objective(s) are not exhaustive of the present invention in its entirety and are enclosed solely for the purpose of illustration. Further, the present invention encloses within its scope and purview, any structural alternative(s) and/or any functional equivalent(s) even though, such structural alternative(s) and/or any functional equivalent(s) are not mentioned explicitly herein or elsewhere, in the present disclosure. The present invention therefore encompasses also, any improvisation[s]/modification[s] applied to the structural alternatives/functional alternative[s] within its scope and purview. The present invention may be embodied in other specific form[s] without departing from the essential attributes thereof.

Furthermore, the terms and phrases used herein are not intended to be limiting, but rather are to provide an understandable description. Throughout this specification, the use of the word "comprise" and variations such as "comprises" and "comprising" may imply the inclusion of an element or elements not specifically recited.

The conventional electric drivetrain as discussed in the prior art includes the electric motor which is typically connected to the wheels through a single drivetrain, and the power output is split between traction and PTO functions. This means that the speed of the PTO must be limited by the speed of the road speed, as the electric motor can only produce a certain amount of torque. This limitation restricts the ability to control the PTO speed independently of the road speed, which can be a challenge in applications such as tractors and field equipment. In scenarios where the vehicle needs to maintain a constant PTO speed while the road speed varies, the conventional drivetrain may struggle to meet these demands without additional systems to decouple the speeds. The single drivetrain and fixed torque output can limit the flexibility of the electric drivetrain in terms of adapting to different operating conditions or applications.

But in the case of the present invention, the electric drivetrain allows for more precise control of power distribution, enhancing the vehicle's performance and efficiency, provides a balance between torque and speed, allows for better traction control and adaptability to different driving conditions, and ensures that power can be efficiently transferred to where it's needed most, without compromising the vehicle's mobility.

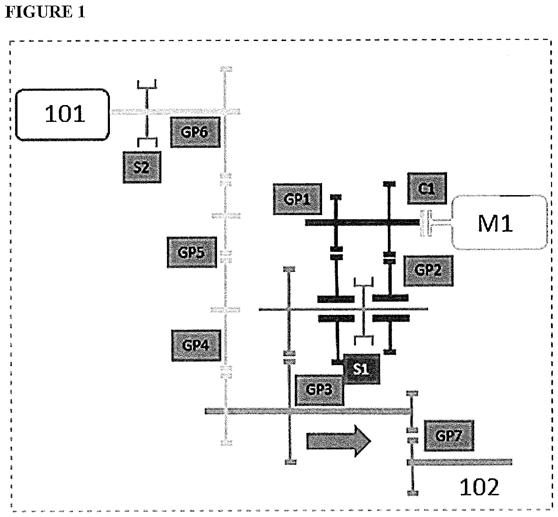

Referring to Figure 1, in an embodiment of the present invention, provides an independent power split transfer drivetrain (100) for electric vehicles (EV), comprising: at least two prime movers comprising a first motor M1 for driving a plurality of wheels and a second motor M2 for driving the Power Take-Off (PTO); a transmission unit comprising a 2-Stage reduction gearbox which splits the power between a front and rear axle using a plurality of traction gear pairs (GP1, GP2, GP3, GP4, GP5, and GP6) and between a mid and rear PTO's using a plurality of PTO gear pairs (GP7, GP8, GP9 and GP10); a flexible coupling C1 connects the output shaft of the first motor M1 and the second motor M2 to the transmission unit; a shift sleeve S1 configured to assembled in between the traction gear pairs GP1 and GP2. The 2-Stage reduction gearbox is configured to be in neutral stage and the traction gear pairs GP1, GP2 are rotated freely without engaging the output shaft when the vehicle is switched on.

The independent power split transfer drivetrain (100) working on following modes comprises:
**(i) two wheel drive (2WD) mode,** the first motor M1 drives the rear axle (102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on user selection of the direction of the shift using the range shift lever, the power is transmitted from either GP1 or GP2 to GP3 to GP7 to power the rear axle (102) for driving the rear wheels when shift sleeve S1 engages with either GP1 or GP2,
**(ii) four wheel drive (4WD) mode,** the first motor M1 drives both the front and rear axle (101, 102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on the direction of the shift when the user selects the high range speed using the range shift lever, the power is transmitted from either GP1 to GP3 to GP7 or GP2 to GP3 to GP7 to powers the rear axle (102) for driving the rear wheels when shift sleeve S1 engages with either GP1 or GP2 and simultaneously the power is transmitted from GP3 to GP4 to GPS to GP6 to power the front axle (102) for driving the front wheels when shift sleeve S2 is engaged, and
**(iii) PTO motor mode:** the second motor M2 drives the PTOs, the output shaft of the second motor M2 rotates when the electrical lever is actuated, and the power is transmitted from the second Motor M2 to the traction gear pair GP8 and GP11, the power is transmitted from GP8 to GP9 to GP10 to powers the mid PTO when the shift sleeve S3 engages with GP8, the GP11 directly powers the rear PTO when shift sleeve S4 engages with GP 11, and both the mid and rear PTOs are powered when shift sleeve S3 and S4 engages with GP8 and GP11.

In one embodiment of the present invention, the first motor M1 is a traction motor.

In one embodiment of the present invention, the second motor M2 is a PTO motor.

In one embodiment of the present invention, the mid PTO (103) is positioned on the middle of the vehicle for driving mid-mounted implements for gardening.

In one embodiment of the present invention, the rear PTO (104) is positioned on the rear of the vehicle for driving rear-mounted implements for agricultural applications.

In one embodiment of the present invention, the mid-mounted implements comprise a mid-mount mower, a hydraulic motor, a gear motor etc.

In one embodiment of the present invention, the rear-mounted implements comprise a lawn mower, a rotary tiller, a sprayer, etc.

In one embodiment of the present invention, the traction gear GP3 is a constant drop pinion.

Another embodiment of the present invention is to provide a method of working of independent power split transfer drivetrain (100) for electric vehicles (EV), said method comprises steps of:
a. during two wheel drive (2WD) mode: driving the rear axle (102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on user selection of the direction of the shift using the range shift lever, transmitting the power from either GP1 or GP2 to GP3 to GP7 to power the rear axle (102) for driving the rear wheels when shift sleeve S1 engages with either GP1 or GP2,
b. during four wheel drive (4WD) mode: driving both the front and rear axle (101, 102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on the direction of the shift when the user selects the high range speed using the range shift lever, transmitting the power from either GP1 to GP3 to GP7 or GP2 to GP3 to GP7 to powers the rear axle (102) for driving the rear wheels when shift sleeve S1 engages with either GP1 or GP2 and simultaneously transmitting the power from GP3 to GP4 to GP5 to GP6 to power the front axle (102) for driving the front wheels when shift sleeve S2 is engaged, and
c. (iii) during PTO motor mode: driving the PTOs by the second motor M2, rotating the output shaft of the second motor M2 when the electrical lever is actuated, transmitting the power from the second Motor M2 to the traction gear pair GP8 and GP 11, transmitting the power from GP8 to GP9 to GP10 to powers the mid PTO when the shift sleeve S3 engages with GP8, directly powering the rear PTO by the GP 11 when shift sleeve S4 engages with GP11, and powering both the mid and rear PTOs when shift sleeve S3 and S4 engages with GP8 and GP11.

### WORKING EXAMPLE

An exemplary embodiment discloses an independent power split transfer drivetrain for electric vehicles (EV), comprising at least two prime movers comprising a first motor M1 for driving a plurality of wheels and a second motor M2 for driving the Power Take-Off (PTO); a transmission unit comprising a 2-Stage reduction gearbox which splits the power between a front and rear axle (101, 102) using a plurality of traction gear pairs (GP1, GP2, GP3, GP4, GP5, and GP6) and between a mid and rear PTO's (103, 104) using a plurality of PTO gear pairs (GP7, GP8, GP9 and GP10); a flexible coupling C1 connects the output shaft of the first motor M1 and the second motor M2 to the transmission unit; a shift sleeve S1 configured to assembled in between the traction gear pairs GP1 and GP2. The 2-Stage reduction gearbox is configured to be in neutral stage and the traction gear pairs GP1, GP2 are rotated freely without engaging the output shaft when the vehicle is switched on.

The independent power split transfer drivetrain working on following modes comprises:
**(i) two wheel drive (2WD) mode,** the first motor M1 drives the rear axle (102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on user selection of the direction of the shift using the range shift lever, the power is transmitted from either GP1 or GP2 to GP3 to GP7 to power the rear axle (102) for driving the rear wheels when shift sleeve S1 engages with either GP1 or GP2,
**(ii) four wheel drive (4WD) mode,** the first motor M1 drives both the front and rear axle (101, 102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on the direction of the shift when the user selects the high range speed using the range shift lever, the power is transmitted from either GP1 to GP3 to GP7 or GP2 to GP3 to GP7 to powers the rear axle (102) for driving the rear wheels when shift sleeve S1 engages with either GP1 or GP2 and simultaneously the power is transmitted from GP3 to GP4 to GP5 to GP6 to power the front axle (102) for driving the front wheels when shift sleeve S2 is engaged, and
**(iii) PTO motor mode:** the second motor M2 drives the PTOs, the output shaft of the second motor M2 rotates when the electrical lever is actuated, and the power is transmitted from the second Motor M2 to the traction gear pair GP8 and GP 11, the power is transmitted from GP8 to GP9 to GP10 to powers the mid PTO when the shift sleeve S3 engages with GP8, the GP11 directly powers the rear PTO when shift sleeve S4 engages with GP11, and both the mid and rear PTOs are powered when shift sleeve S3 and S4 engages with GP8 and GP11.

### ADVANTAGE OF THE PRESENT INVENTION

The present invention relates to an independent power split transfer drivetrain which allows for additional power delivery to the front axle, which can be crucial for heavy-duty tasks and improving the vehicle's stability and traction.

The present invention relates to an independent power split transfer drivetrain which splits power based on demand means that the vehicle can operate more efficiently, reducing energy waste and improving overall performance.

The present invention relates to an independent power split transfer drivetrain which runs the PTO at the required speeds without being affected by the vehicle's road speed, which is essential for tasks that require consistent PTO performance.

The present invention relates to an independent power split transfer drivetrain which ensures that the vehicle can maintain optimal performance in both driving and auxiliary functions, which is a substantial improvement over traditional EV architectures where the top speed is often limited by the maximum angular speed of the electric machines.

It will be apparent to a person skilled in the art that the above description is for illustrative purposes only and should not be considered as limiting. Various modifications, additions, alterations, and improvements without deviating from the spirit and the scope of the invention may be made by a person skilled in the art.

### LIST OF NUMERALS:

(100). Independent power split transfer drivetrain
(101). Front Axle
(102). Rear Axle
(103). Mid-PTO
(104). Rear PTO
(C1). Flexible coupling
(GP1, GP2, GP3, GP4, GP5, GP6). a plurality of traction gear pairs
(GP7, GP8, GP9, GP10). a plurality of PTO gear pairs
(Ml). First Motor
(M2). Second Motor
(S 1). Shift Sleeve

## Claims

1. An independent power split transfer drivetrain (100) for electric vehicles (EV), comprising:
a. at least two prime movers comprising a first motor M1 for driving a plurality of wheels and a second motor M2 for driving the Power Take-Off (PTO);
b. a transmission unit comprising a 2-Stage reduction gearbox which splits the power between a front and rear axle (101, 102) using a plurality of traction gear pairs (GP1, GP2, GP3, GP4, GP5, and GP6) and between a mid and rear PTO's (103, 104) using a plurality of PTO gear pairs (GP7, GP8, GP9 and GP10);
c. a flexible coupling C1 connects the output shaft of the first motor M1 and the second motor M2 to the transmission unit;
d. a shift sleeve S1 configured to assembled in between the traction gear pairs GP1 and GP2,
wherein the 2-Stage reduction gearbox is configured to be in neutral stage and the traction gear pairs GP1, GP2 are rotated freely without engaging the output shaft when the vehicle is switched on,
wherein the independent power split transfer drivetrain working on modes comprises:
(i) two wheel drive (2WD) mode, the first motor M1 drives the rear axle (102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on user selection of the direction of the shift using the range shift lever, the power is transmitted from either GP1 or GP2 to GP3 to GP7 to power the rear axle (102) for driving the rear wheels when shift sleeve S1 engages with either GP1 or GP2,
(ii) four wheel drive (4WD) mode, the first motor M1 drives both the front and rear axle (101, 102), the output shaft of the first motor M1 rotates when the accelerator pedal of the vehicle is pressed, the power from the first Motor M1 is transmitted to the traction gear pair GP1 and GP2, the shift sleeve S1 engages with either traction gear pair GP1 or GP2 based on the direction of the shift when the user selects the high range speed using the range shift lever, the power is transmitted from either GP1 to GP3 to GP7 or GP2 to GP3 to GP7 to powers the rear axle (102) for driving the rear wheels when shift sleeve S1 engages with either GP1 or GP2 and simultaneously the power is transmitted from GP3 to GP4 to GP5 to GP6 to power the front axle (102) for driving the front wheels when shift sleeve S2 is engaged, and
(iii) PTO motor mode: the second motor M2 drives the PTOs, the output shaft of the second motor M2 rotates when the electrical lever is actuated, and the power is transmitted from the second Motor M2 to the traction gear pair GP8 and GP11, the power is transmitted from GP8 to GP9 to GP10 to powers the mid PTO when the shift sleeve S3 engages with GP8, the GP11 directly powers the rear PTO when shift sleeve S4 engages with GP 11, and both the mid and rear PTOs are powered when shift sleeve S3 and S4 engages with GP8 and GP11.

2. The independent power split transfer drivetrain (100) as claimed in claim 1, wherein the first motor M1 is a traction motor.

3. The independent power split transfer drivetrain (100) as claimed in claim 1, wherein the second motor M2 is a PTO motor directly connected to GP7 and GP8.

4. The independent power split transfer drivetrain (100) as claimed in claim 1, wherein the mid PTO (103) is positioned on the middle of the vehicle for driving mid-mounted implements for gardening.

5. The independent power split transfer drivetrain (100) as claimed in claim 1, wherein the traction gear GP3 is a constant drop pinion.

6. The independent power split transfer drivetrain (100) as claimed in claim 1, wherein the rear PTO (104) is positioned on the rear of the vehicle for driving rear-mounted implements for agricultural applications.

7. The independent power split transfer drivetrain (100) as claimed in claim 1, wherein the mid-mounted implements comprise a mid-mount mower, hydraulic motor, a gear motor etc.

8. The independent power split transfer drivetrain (100) as claimed in claim 1, wherein the rear-mounted implements comprise a lawn mower, a rotary tiller, a sprayer, etc.

9. A method of working of an independent power split transfer drivetrain (100) as claimed in claim 1, said method comprises steps of:
a. during two wheel drive (2WD) mode: driving the rear axle (102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on user selection of the direction of the shift using the range shift lever, transmitting the power from either GP1 or GP2 to GP3 to GP7 to power the rear axle (102) for driving the rear wheels when shift sleeve S1 engages with either GP1 or GP2,
b. during four wheel drive (4WD) mode: driving both the front and rear axle (101, 102) by the first motor M1, rotating the output shaft of the first motor M1 when the accelerator pedal of the vehicle is pressed, transmitting the power from the first Motor M1 to the traction gear pair GP1 and GP2, engaging the shift sleeve S1 with either traction gear pair GP1 or GP2 based on the direction of the shift when the user selects the high range speed using the range shift lever, transmitting the power from either GP1 to GP3 to GP7 or GP2 to GP3 to GP7 to powers the rear axle (102) for driving the rear wheels when shift sleeve S1 engages with either GP1 or GP2 and simultaneously transmitting the power from GP3 to GP4 to GP5 to GP6 to power the front axle (102) for driving the front wheels when shift sleeve S2 is engaged, and
c. (iii) during PTO motor mode: driving the PTOs by the second motor M2, rotating the output shaft of the second motor M2 when the electrical lever is actuated, transmitting the power from the second Motor M2 to the traction gear pair GP8 and GP11, transmitting the power from GP8 to GP9 to GP10 to powers the mid PTO when the shift sleeve S3 engages with GP8, directly powering the rear PTO by the GP 11 when shift sleeve S4 engages with GP11, and powering both the mid and rear PTOs when shift sleeve S3 and S4 engages with GP8 and GP 11.
